# EUROPEAN PATENT APPLICATION

(11) **EP 3 549 697 A1**
(43) Date of publication of application: **09.10.2019**
(21) Application number: 18166115.8
(22) Date of filing: 06.04.2018
(51) Int. Cl.: B22F 3/105, A47L 9/24, B08B 5/04, B25J 9/06, B25J 9/10, B25J 18/06, B33Y 40/00, B29C 64/35

(54) **ROBOTIZED VACUUM CLEANER FOR THREE-DIMENSIONAL PRINTERS**

(71) Applicant: Siemens Aktiengesellschaft, 80333 München (DE)
(72) Inventor: Ceriani, Nicola Maria, 91052 Erlangen (DE)

(57) **Abstract**

What is proposed is a robotized vacuum cleaner (1) for automatic removal of powder (8) from a build chamber (6) of a powder-based three-dimensional printer (7), which is designed to perform a planned cleaning trajectory during a powder removal process in the build chamber (6) of the powder-based three-dimensional printer (7) in order to remove unbounded powder (8) from the build chamber (6).

## Description

The present disclosure is directed to a robotized vacuum cleaner according to claim 1. Furthermore, the present disclosure is directed to a vacuum cleaning system according to claim 7 and a method of method of removing unbounded powder from a build chamber of a three-dimensional printer according to claim 10.

Many so-called powder-based additive manufacturing technologies use a raw material in the form of powder, e.g. metal or polymer powder. Such powder is, depending on the specific additive manufacturing technology, fused together using laser, electron beam or chemical binding agents, creating the shape of the final part from the raw material.

At the end of the manufacturing process, the part finds itself immersed in the powder that has not been fused, and that is therefore leftover from the process. This leftover powder has to be removed from the three-dimensional printer build chamber in order to clean and prepare the printed part for the next processing steps and also to allow the recycling of the raw material.

In the state of the art powder removal is normally performed manually with vacuum cleaners. Operators work with a tool gradually removing the powder until the build chamber of the three-dimensional printer is empty and the manufactured part is clean. The vacuum cleaner is connected to special containers where the removed powder is collected for recycling.

Depending on the configuration of the specific machine the operators work either directly in the machine build chamber or, if the built part with the powder can be isolated and removed from the machine, in a dedicated cleaning station. In the second case the vacuum cleaner is usually integrated in the cleaning station and a glove box is used, so that the cleaning area is isolated from the exterior. Use of personal protective equipment such as masks and goggles is however required in both cases to protect the operator from the contact with the powder.

Document EP 0 431 924 A2 discloses a process for making a component by depositing a first layer of a powder material in a confined region and then depositing a binder material to selected regions of the layer of powder material to produce a layer of bonded powder material at the selected regions. Such steps are repeated a selected number of times to produce successive layers of selected regions of bonded powder material so as to form the desired component. The unbounded powder material is then removed manually by means of suction or brushes.

The described procedures that are currently followed in state-of-the art three-dimensional printers have several problems and disadvantages:
- Manual work is used for a very low added-value operation, what is not economical.
- The repeatability of the process is low since the cleaning operation is manually executed.
- The operators are exposed to contact with powder, which causes safety concerns.

An objective of the present invention is to provide a more economical, efficient and safe way of removing leftover powder from a build chamber of a three-dimensional printer.

The problem is solved by a robotized vacuum cleaner for automatic removal of powder from a build chamber of a powder-based three-dimensional printer according to claim 1. Furthermore, the problem is solved by a vacuum cleaning system according to claim 7 and by a method of removing unbounded powder from a build chamber of a three-dimensional printer according to claim 10. Advantageous aspects of the invention are the subject of the dependent claims.

According to the invention, the robotized vacuum cleaner for automatic removal of powder from a build chamber of a powder-based three-dimensional printer is designed to perform a planned cleaning trajectory during a powder removal process in the build chamber of the powder-based three-dimensional printer in order to remove unbounded powder from the build chamber.

The presented invention, compared to the state of the art of cleaning systems for powder-based three-dimensional printers, makes the powder removal process automatic. To achieve this, the invention proposes a robotized vacuum cleaner that is able to autonomously remove the leftover powder from the build chamber of a three-dimensional printer.

Such solution offers several advantages: the operators do not have to perform the cleaning task, with consequent saving of the related labor costs and allowing dedicating the workforce to higher value-added tasks. Additionally, an exposition of the operators to the powder during the cleaning phase is avoided, eliminating a source of health risk and the need of use of protective equipment. More than this, thanks to the automatic execution of a pre-planned cleaning trajectory, a greater repeatability can be obtained in the cleaning process and an optimization of such a process is possible.

In a preferred embodiment of the invention, the robotized vacuum cleaner comprises a robotic arm, designed to act as a vacuum cleaner hose and comprising a robotic kinematic structure. The robotic arm can be moved in a controlled way to execute the cleaning trajectory during the powder removal process. The integration of the vacuum cleaner hose in a structure of the robotic arm allows moving the cleaner hose together with the robotic arm.

According to a further preferred embodiment of the invention, the robotic kinematic structure is based on a multi-backbone continuum kinematic scheme, comprising multiple circular cross sections. Further, the robotized vacuum cleaner comprises an actuation system, comprising at least three cables, which are attached to the multiple circular cross sections. Due to the special robotic kinematic structure not only the pose of an end effector of the robotic arm can be controlled, but also the pose of intermediate sections of the robotic arm.

Preferably, the robotic kinematic structure comprises circular cross sections, at least N-1 of the N circular cross sections having at least three holes, through which the cables of the actuation system are running, in order to arrange the circular cross sections spaced apart from each other, and at least one of the N circular cross sections having attachments for attaching the cables. This structure makes the robotic kinematic structure extremely flexible.

In a further embodiment of the invention, the robotic arm comprises an external structure, which surrounds the robotic kinematic structure, providing an external surface of the robotic arm and protecting the robotic kinematic structure from dust, water and the like. It also comprises an internal structure, which is surrounded by the robotic kinematic structure, providing the vacuum cleaner hose for aspirating the unbounded powder from the build chamber of the three-dimensional printer.

Preferably, the robotized vacuum cleaner comprises at least one motor, which is connected to the at least three cables of the actuation system and which is designed to change a position of the cables.

The problem is also solved by a vacuum cleaning system, comprising:
- a robotized vacuum cleaner according to the invention, which is designed to access a build chamber of a three-dimensional printer,
- an aspiration unit for aspirating the unbounded powder from the build chamber of the three-dimensional printer,
wherein the aspiration unit is connected to the robotized vacuum cleaner by means of a connection pipe, and wherein the aspiration unit comprises a robotic hose control system, which is designed to plan a cleaning trajectory and to transmit according control commands to the robotized vacuum cleaner.

In a preferred embodiment of the invention, the robotic hose control system of the vacuum cleaning system is connected to a control system of the three-dimensional printer for adapting the cleaning trajectory according to movements of the three-dimensional printer. By this, the efficiency of the cleaning process can be improved significantly.

Preferably, the vacuum cleaning system comprises a spool for winding the robotized vacuum cleaner around. Hence the robotized vacuum cleaner can extend and retract in and from the build chamber of the three-dimensional printer, without occupying the build chamber of the three-dimensional printer.

The problem is also solved by a method of removing unbounded powder from a build chamber of a three-dimensional printer, wherein a robotized vacuum cleaner according to the invention or a vacuum cleaning system according to the invention is used.

Features of examples of the present disclosure will become apparent by reference to the following detailed description of the drawings. For the sake of brevity, reference numerals or features having a previously described function may or may not be described in connection with other drawings in which they appear.
- FIG 1: is a perspective view of a robotized vacuum cleaner during a cleaning process;
- FIG 2: illustrates a first robotic kinematic structure for a robotized vacuum cleaner according to the invention;
- FIG 3: illustrates a circular cross section of the robotic kinematic structure according to figure 2;
- FIG 4: illustrates a second robotic kinematic structure for a robotized vacuum cleaner according to the invention;
- FIG 5: illustrates an actuation system for a robotized vacuum cleaner according to the invention;
- FIG 6: illustrates the actuation system of figure 5 in combination with the robotic kinematic structure according to figure 2;
- FIG 7: is an illustration of the actuation system of figure 5 in combination with the robotic kinematic structure according to figure 4;
- FIG 8: is another illustration of the actuation system of figure 5 in combination with the robotic kinematic structure according to figure 4;
- FIG 9: illustrates motion capabilities of a robotized vacuum cleaner according to the invention;
- FIG 10: illustrates an aspiration of unbounded powder by means of a robotized vacuum cleaner according to the invention;
- FIG 11: illustrates a vacuum cleaning system according to the invention in a perspective view;
- FIG 12: illustrates a cleaning trajectory for a robotized vacuum cleaner; and
- FIG 13: shows an information flow diagram for generation and execution of the cleaning trajectory according to figure 12.

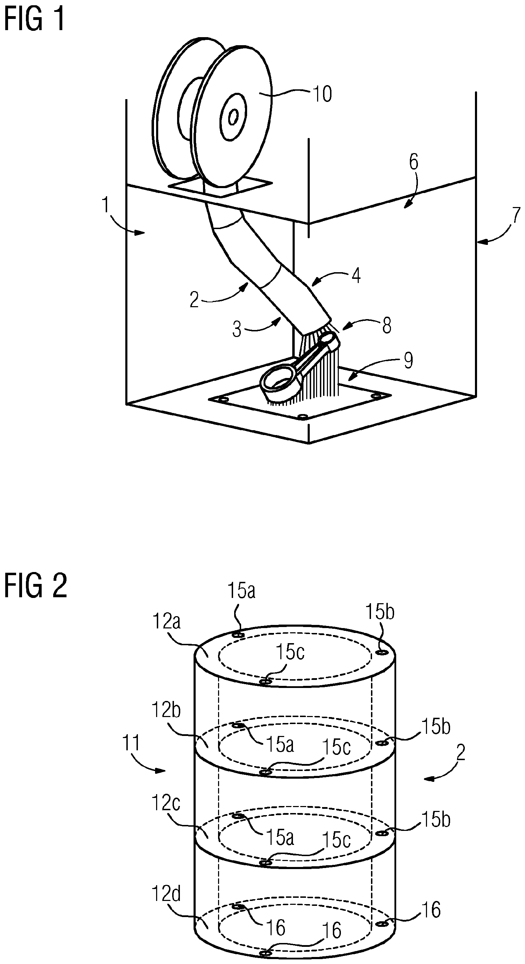

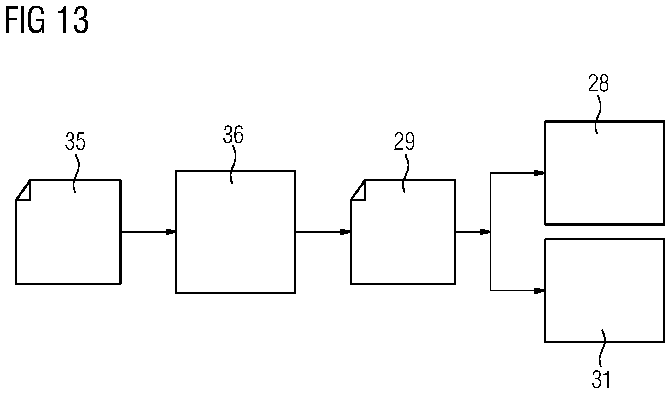

In Figure 1 there is depicted a robotized vacuum cleaner 1 according to the invention. The robotized vacuum cleaner 1 comprises a robotic arm 2 which acts as a cleaner hose 3. Due to a robotic kinematic structure 4 of the robotic arm 2, which is described in detail later on, the cleaner hose 3 can be moved in a controlled way to execute a desired cleaning trajectory 29 (see also Figure 13). The robotic arm 2 of the robotized vacuum cleaner 1 can be moved into a build chamber 6 of a three-dimensional printer 7, which is depicted in Figure 1. The robotized vacuum cleaner 1 is able to autonomously remove powder 8 from the build chamber 6, respectively from a part 9 printed by the three-dimensional printer 7.

The robotized vacuum cleaner 1 according to Figure 1 also comprises a spool 10, around which the robotic arm 2, respectively the cleaner hose 3 can be wound when the robotized vacuum cleaner 1 is not in use.

The robotic arm 2 is based on a multi-backbone continuum kinematic scheme 11, which is depicted in Figure 2. In this scheme 11, the robotic arm 2 is made of a flexible, but longitudinal and torsional rigid, cylindrical element which constitutes an external surface 17 of the robotic arm 2 (due to reasons of a better overview not shown in Figure 2).

In a first robotic kinematic structure 4 for a robotized vacuum cleaner 1 according to Figure 2 the robotic arm 2 comprises four circular cross sections 12a, 12b, 12c, 12d, also called backbones. Figure 2 shows these four circular cross sections 12a, 12b, 12c, 12d which are spaced apart from each other by means of the external cylindrical element 17 (not shown in Figure 2) or by means of cables 14a, 14b, 14c, which are described later on (not shown in Figure 2).

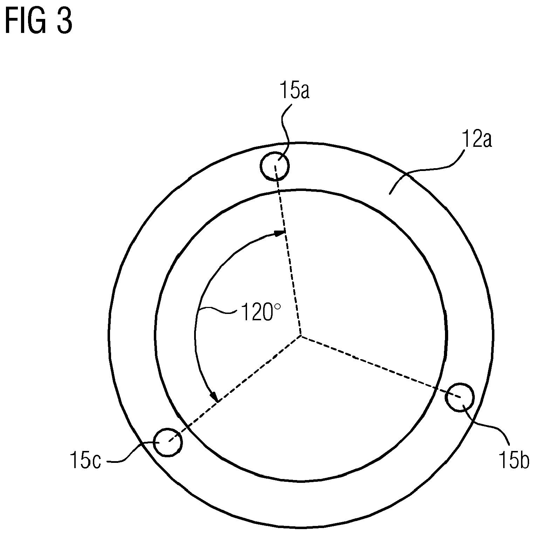

The uppermost three circular cross sections 12a, 12b, 12c each comprise three holes 15a, 15b, 15c, through which the cables 14a, 14b, 14c can run. The three holes 15a, 15b, 15c have an angular spacing of 120 degrees, but essentially each other spacing is also possible (the spacing is shown in Figure 3). The circular cross section 12d, which is at the bottom of the robotic arm 2 does not comprise holes, but attachments 16 for attaching the cables 14a, 14b, 14c running through the holes 15a, 15b, 15c of the other circular cross sections 12a, 12b, 12c.

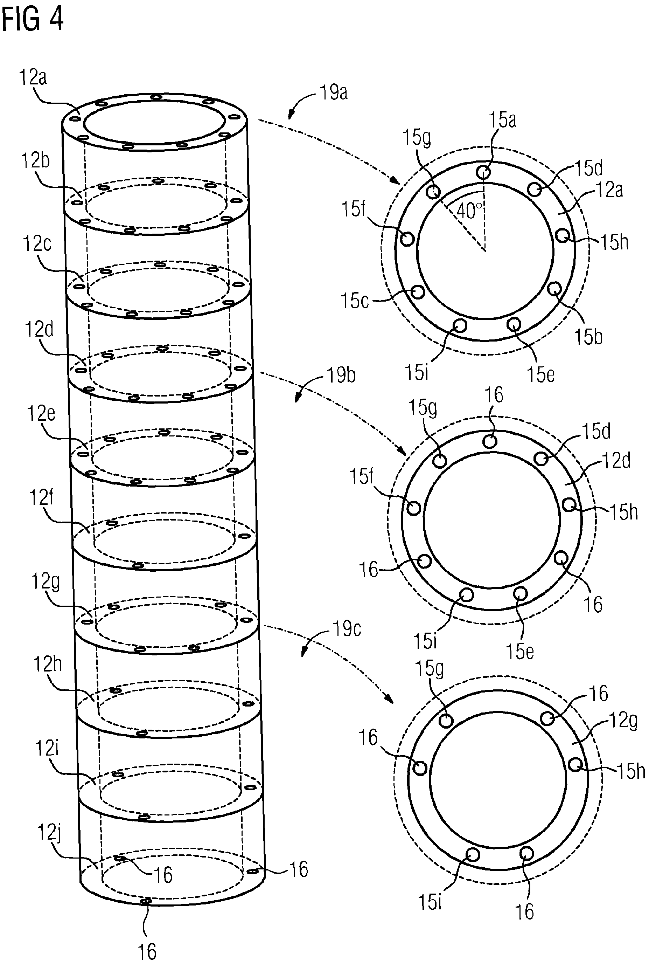

In a second robotic kinematic structure 4 for a robotized vacuum cleaner 1 according to Figure 4 the robotic arm 2 comprises ten circular cross sections 12a, 12b, 12c, 12d, 12e, 12f, 12g, 12h, 12i, 12j. The uppermost three circular cross sections 12a, 12b, 12c each comprise nine holes 15a, 15b, 15c, 15d, 15e, 15f, 15g, 15h, 15i, through which nine cables 14a, 14b, 14c can run. The nine holes 15a, 15b, 15c, 15d, 15e, 15f, 15g, 15h, 15i have an angular spacing of 40 degrees, but essentially each other spacing is also possible. The uppermost four circular cross sections 12a, 12b, 12c, 12d form a first section 19a of the robotic arm 2.

The circular cross section 12d, which is the fourth, seen from the top of the robotic kinematic structure 4, comprises six holes 15d, 15e, 15f, 15g, 15h, 15i and attachments for three cables 14a, 14b, 14c. Two circular cross sections 12e, 12f below this fourth circular cross section 12d comprise six holes 15d, 15e, 15f, 15g, 15h, 15i. The fifth, sixth and seventh circular cross sections 12e, 12f, 12g form a second section 19b of the robotic arm 2.

The seventh circular cross section 12g, seen from the top of the robotic kinematic structure 4, comprises three holes 15g, 15h, 15i and attachments for three cables 14a, 14b, 14c. Two circular cross sections 12h, 12i below this seventh circular cross section 12g comprise three holes 15g, 15h, 15i. The circular cross section 12j at the bottom of the robotic kinematic structure 4 only comprises attachments 16 and no holes. The eighth, ninth and tenth circular cross sections 12h, 12i, 12j form a third section 19c of the robotic arm 2.

Each of the sections 19a, 19b, 19c of the robotic arm 2 can be independently actuated by a dedicated actuation system 13, whereby a reach and a mobility of the robotic arm 2 is increased, compared to the first robotic kinematic structure 4 as shown in Figure 2.

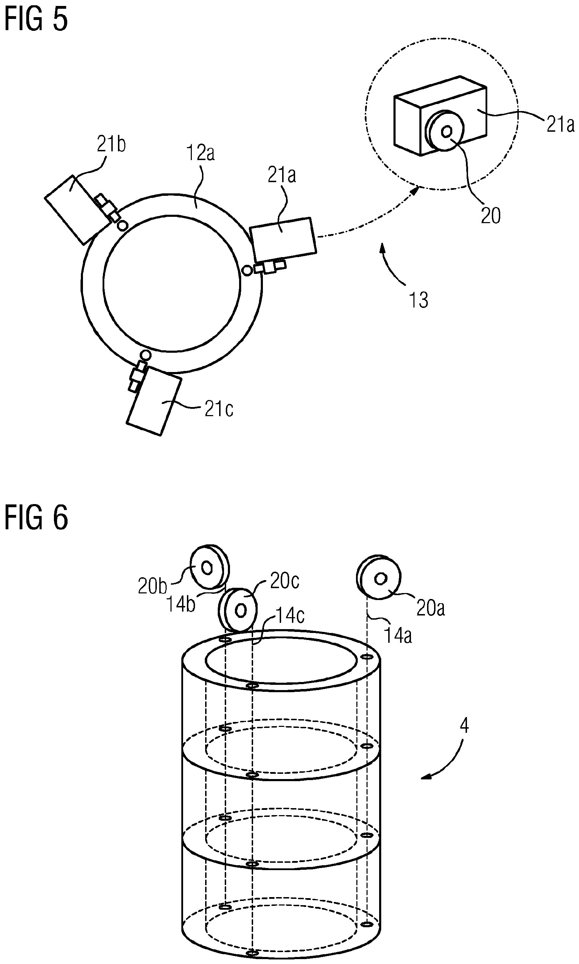

Figures 5 and 6 show an actuation system 13 for the first robotic kinematic structure 4 as shown in Figure 2. It comprises three motors 21a, 21b, 21c, each comprising a cable sprocket 20a, 20b, 20c. On these cable sprockets 20a, 20b, 20c three cables 14a, 14b, 14c can be rolled to control the position of the cables 14a, 14b, 14c.

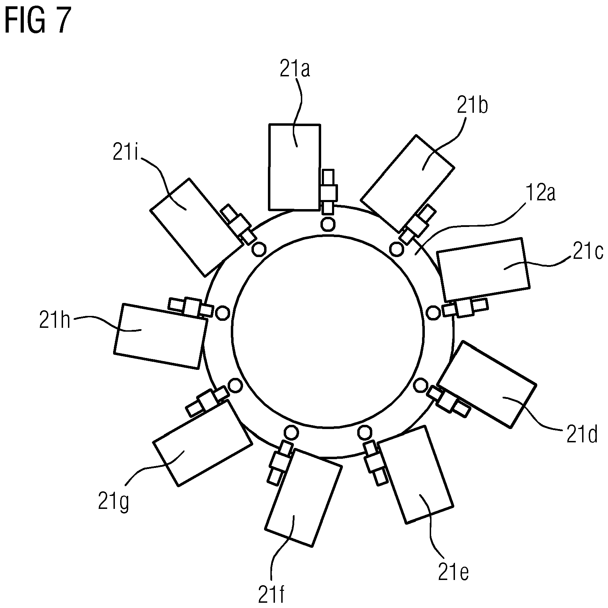

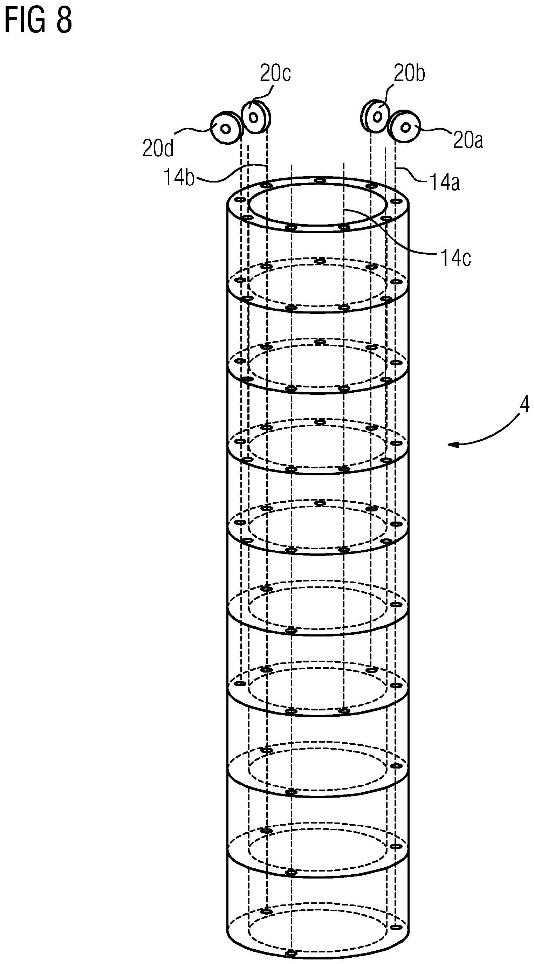

Figures 7 and 8 show an actuation system 13 for the second robotic kinematic structure 4 as shown in Figure 4. It comprises nine motors 21a, 21b, 21c, 21d, 21e, 21f, 21g, 21h, 21i, each comprising a cable sprocket 20a, 20b, 20c, 20d (only four of them are shown in Figure 8 due to a better overview). The three triplets of motors 21a, 21b, 21c, 21d, 21e, 21f, 21g, 21h, 21i each control the nine cables 14a, 14b, 14c of the three sections 19a, 19b, 19c of the second robotic kinematic structure 4.

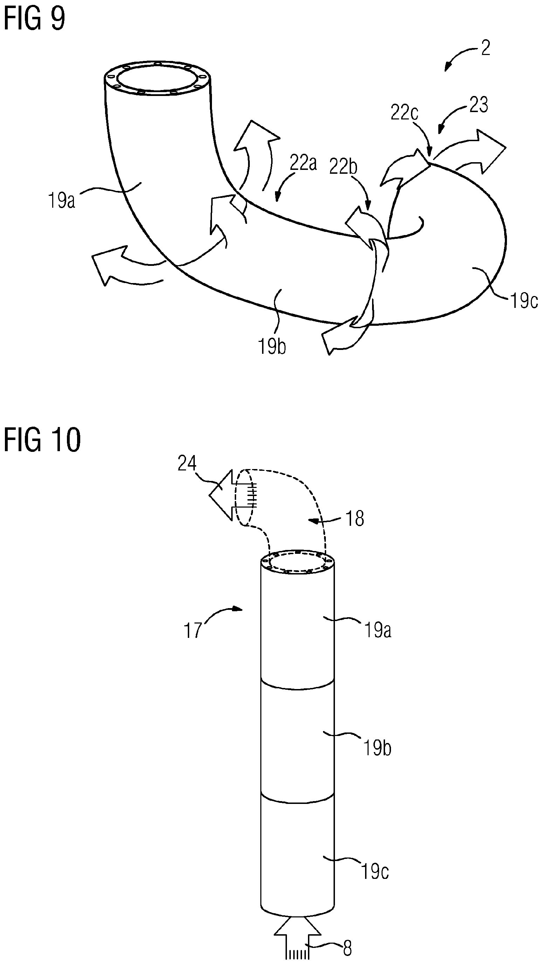

The circular cross sections 12a, 12b, 12c, 12d, 12e, 12f, 12g, 12h, 12i, 12j take into account the complexity of the actuation system 13, comprising multiple sections 19a, 19b, 19c and multiple cables 14a, 14b, 14c for which the required holes in the circular cross sections 12a, 12b, 12c, 12d, 12e, 12f, 12g, 12h, 12i, 12j are made. Figure 9 illustrates motion capabilities provided by the use of multiple (three) sections 19a, 19b, 19c for the robotic arm 2. A tip 22a, 22b, 22c of each section 19a, 19b, 19c can be bent in any direction, independently from a movement of the other sections 19a, 19b, 19c. The movements of the sections 19a, 19b, 19c sum up and make it possible to compose complex poses of the robotic arm 2. Thanks to the capability to control an end portion 23 of the robotic arm 2 and its intermediate sections 19a, 19b, 19c, a shape of the cleaner hose 3 can be adapted to avoid interference with parts printed by the three-dimensional printer 7 in the build chamber 6.

As shown in Figure 10, the robotic arm 2 comprises an external structure 17, e.g. made of an elastic plastic material. The external structure 17 surrounds the robotic kinematic structure 4 of the robotic arm 2 to protect it from external impacts like dust, water and the like. The robotic arm 2 also comprises an internal surface 18, which is surrounded by the robotic kinematic structure 4. In other words, the robotic kinematic structure 4 is sandwiched between the external structure 17 and the internal structure 18.

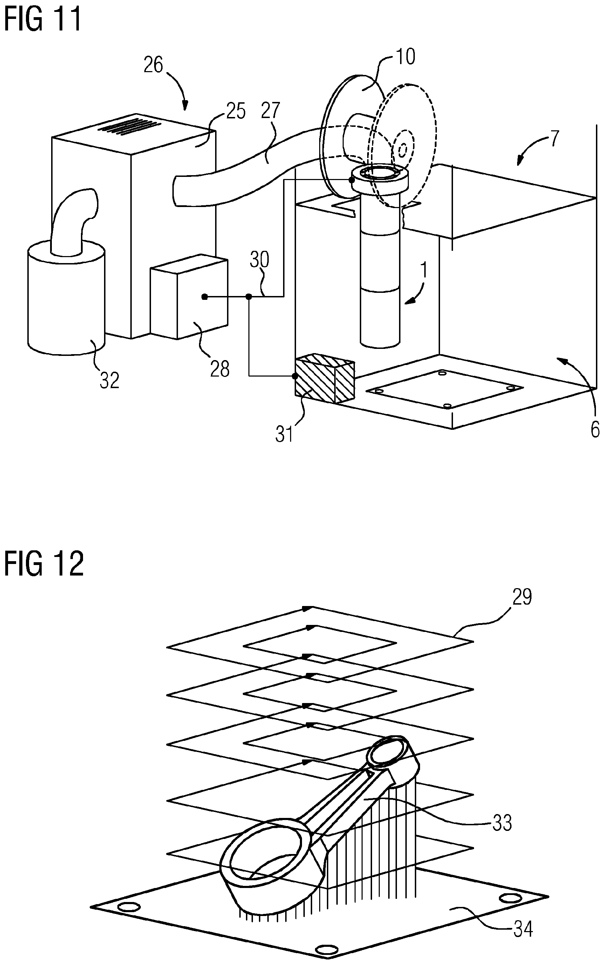

The internal structure 18 is used as a vacuum cleaner hose 3 for aspirating unbounded powder 8 from the build chamber 6 of the three-dimensional printer 7. There is an internal flow 24 through the vacuum cleaner hose 3 into an aspiration unit 25 of a complete vacuum cleaning system 26 via a flexible, twistable connection pipe 27, as illustrated in Figure 11. The robotized vacuum cleaner 1 can be winded around the spool 10 when it is not in use. The robotic arm 2 of the robotized vacuum cleaner 1 can be placed inside the three-dimensional printer 7 in a position where it can access the build chamber 6.

The aspiration unit 25 comprises a tank 32 for collection of the aspirated powder 8. It also comprises a robotic hose control system 28, which is designed to plan a cleaning trajectory 29 and to transmit according control commands 30 to the robotized vacuum cleaner 1.

The robotic arm 2 performs a powder removal operation by executing the cleaning trajectory 29 planned by the robotic hose control system 28. Such trajectory 29 is similar to that of a machining cycle. But instead of following a material to be removed, it covers parts 33 of a build volume where no part is built and leftover powder 8 remains. Figure 12 shows such a cleaning trajectory 29.

The cleaning trajectory 29 can be computed using CAD/CAM tools, such as the ones that are used to design a part 33 to be printed by a three-dimensional printer 7 and to program the respective three-dimensional printing cycle.

During the cleaning cycle not just the robotic arm 2 will be moved, but also axes of the three-dimensional printer 7. A build plate 34 of the three-dimensional printer 7 will be gradually lifted, so that for computing the cleaning trajectory 29 the robotic hose control system 28 also has to take into account movements of the three-dimensional printer 7.

Figure 13 shows an according information flow for a generation and execution of the cleaning trajectory 29. Starting with information 35 about a part 33 which is supposed to be printed three-dimensionally, the cleaning trajectory 29 is computed by means of CAD/CAM tools in a second step 36. The resulting cleaning trajectory 29 is transmitted to the robotic hose control system 28 which translates the cleaning trajectory 29 into according control commands 30 for the robotized vacuum cleaner 1. The resulting cleaning trajectory 29 is also transmitted to the control system 31 of three-dimensional printer 7, which takes into account movements of the robotic arm 2 of the robotized vacuum cleaner 1.

While several examples have been described in detail, it is to be understood that the disclosed examples may be modified. Therefore, the foregoing description is to be considered non-limiting.

## Claims

1. Robotized vacuum cleaner (1) for automatic removal of powder (8) from a build chamber (6) of a powder-based three-dimensional printer (7), which is designed to perform a planned cleaning trajectory during a powder removal process in the build chamber (6) of the powder-based three-dimensional printer (7) in order to remove unbounded powder (8) from the build chamber (6).

2. Robotized vacuum cleaner (1) according to claim 1, which comprises a robotic arm (2), designed to act as a vacuum cleaner hose (3) and comprising a robotic kinematic structure (4), which robotic arm (2) can be moved in a controlled way to execute the cleaning trajectory (5) during the powder removal process.

3. Robotized vacuum cleaner (1) according to claim 2, wherein the robotic kinematic structure (4) is based on a multi-backbone continuum kinematic scheme (11), comprising multiple circular cross sections (12a, 12b, 12c, 12d, 12e, 12f, 12g, 12h, 12i, 12j),
and wherein the robotized vacuum cleaner (1) comprises an actuation system (13), comprising at least three cables (14a, 14b, 14c), which are attached to the multiple circular cross sections (12a, 12b, 12c, 12d, 12e, 12f, 12g, 12h, 12i, 12j).

4. Robotized vacuum cleaner (1) according to claim 3, wherein the robotic kinematic structure (4) comprises N circular cross sections (12a, 12b, 12c, 12d, 12e, 12f, 12g, 12h, 12i, 12j), at least N-1 of the N circular cross sections (12a, 12b, 12c, 12d, 12e, 12f, 12g, 12h, 12i, 12j) having at least three holes (15a, 15b, 15c, 15d, 15e, 15f, 15g, 15h, 15i), through which the cables (14a, 14b, 14c) of the actuation system (13) are running, in order to arrange the circular cross sections (12a, 12b, 12c, 12d, 12e, 12f, 12g, 12h, 12i, 12j) spaced apart from each other, and at least one of the N circular cross sections (12a, 12b, 12c, 12d, 12e, 12f, 12g, 12h, 12i, 12j) having attachments (16) for attaching the cables (14a, 14b, 14c).

5. Robotized vacuum cleaner (1) according to one of claims 2 through 4, wherein the robotic arm (2) comprises an external structure (17), which surrounds the robotic kinematic structure (4), providing an external surface (17) of the robotic arm (2),
and an internal structure (18), which is surrounded by the robotic kinematic structure (4), providing the vacuum cleaner hose (3) for aspirating the unbounded powder (8) from the build chamber (6) of the three-dimensional printer (7).

6. Robotized vacuum cleaner (1) according to one of claims 3 through 5, comprising at least one motor (21a, 21b, 21c, 21d, 21e, 21f, 21g, 21h, 21i), which is connected to the at least three cables (14a, 14b, 14c) of the actuation system (13) and which is designed to change a position of the cables (14a, 14b, 14c).

7. Vacuum cleaning system (26), comprising:
- a robotized vacuum cleaner (1) according to one of the preceding claims, which is designed to access a build chamber (6) of a three-dimensional printer (7),
- an aspiration unit (25) for aspirating the unbounded powder (8) from the build chamber (6) of the three-dimensional printer (7),
wherein the aspiration unit (25) is connected to the robotized vacuum cleaner (1) by means of a connection pipe (27), and
wherein the aspiration unit (25) comprises a robotic hose control system (28), which is designed to plan a cleaning trajectory (29) and to transmit according control commands (30) to the robotized vacuum cleaner (1).

8. Vacuum cleaning system (26) according to claim 7, wherein the robotic hose control system (28) is connected to a control system (31) of the three-dimensional printer (7) for adapting the cleaning trajectory (29) according to movements of the three-dimensional printer (7) .

9. Vacuum cleaning system (26) according to claim 7 or 8, which comprises a spool (10) for winding the robotized vacuum cleaner (1) around.

10. Method of removing unbounded powder (8) from a build chamber (6) of a three-dimensional printer (7), wherein a robotized vacuum cleaner (1) according to one of claims 1 through 6 or a vacuum cleaning system (26) according to one of claims 7 through 9 is used.
